# EUROPEAN PATENT APPLICATION

(11) **EP 2 683 214 A1**
(43) Date of publication of application: **08.01.2014**
(21) Application number: 12174573.1
(22) Date of filing: 02.07.2012
(51) Int. Cl.: H05B 3/28, A01K 63/06

(54) **Heater for reptile breeding**

(71) Applicant: Eiko Electric Products Corp., Taipei 114 (TW)
(72) Inventor: Wang, Yu-Chin, 114 Taipei (TW)
(74) Representative: Ruschke, Hans Edvard

(57) **Abstract**

A heater for use in a reptile breeding cage (100) is disclosed to include a flat heater body (10) including a front heat-radiating face (11), a flat back cover (12) covered on a back side of the front heat-radiating face (11), a heating layer (13) set in between the front heat-radiating face (11) and the flat back cover (12) and a thermal insulation layer (14) sandwiched between the heating layer (13) and the flat back cover (12), and a flat protective shell (20) accommodating the flat heater body (10) and providing an opening (21) through which the front heat-radiating face (11) of the flat heater body (10) is exposed to the outside.

## Description

### BACKGROUND OF THE INVENTION

### 1. Field of the Invention:

The present invention relates to reptile breeding facilities and more particularly, to a heater for reptile breeding that has a low profile and avoids scaling accidents under long-term use.

### 2. Description of the Related Art:

A wide variety of reptiles and amphibians, such as iguana, dragon, tortoise, aquatic turtle, phelsuma, dactylus, crickets, grasshoppers, snake, and etc. are living in this world. Recently, the wave of reptile breeding has become a rising trend due to the reason that reptile enthusiasts can observe reptile living environment when breeding reptiles and enjoy the feeling of coming into contact with the wild word.

People who love reptiles as pets may use a reptile cage to raise reptiles. Nowadays, various different reptiles and amphibians breeding cages are commercially available. Riverbed sand, rain forest bark, jungle soil and plants may be provided in a reptile cage to simulate natural breeding environment, ensuring a healthy growth of breeding reptiles. Further, a reptile cage may be equipped with a lighting fixture to simulate daylight and to keep cold blooded reptiles warm.

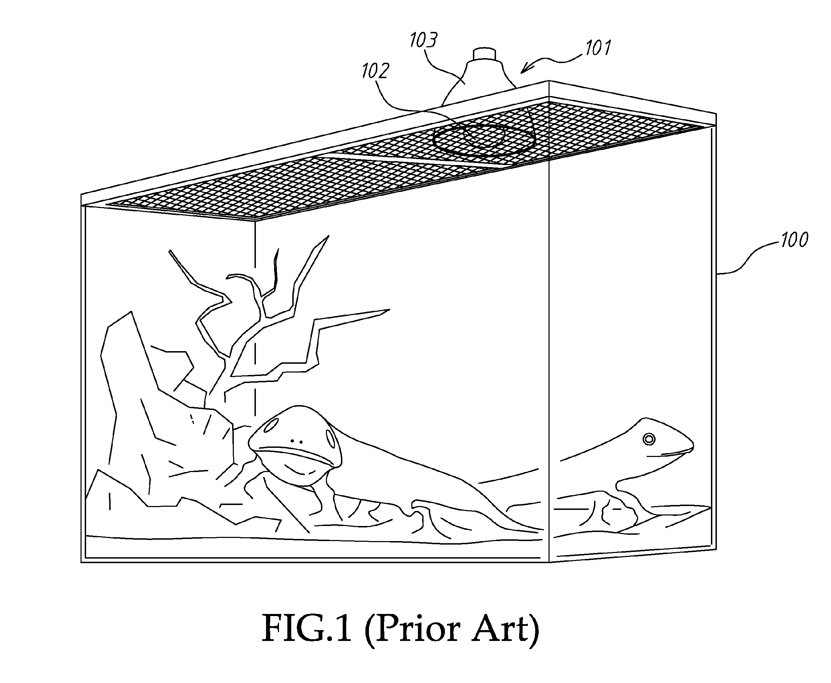

FIG. 1 illustrates a conventional reptile breeding cage **100** equipped with a heat lamp **101.** The heat lamp **101** is disposed at the top side of the reptile breeding cage **100** and downwardly facing toward the inside of the reptile breeding cage **100.** The heat lamp **101** comprises a heat bulb **102,** and a metal lampshade **103** surrounding the heat bulb **102.** The metal lampshade **103** is shaped like an inverted hopper with the large open side thereof facing downward so that the heat lamp **101** can give off light and heat to a large area in the reptile breeding cage **100.**

However, the aforesaid heat lamp **101** is not good enough for use in a reptile breeding cage. The metal lampshade **103** can transfer heat. A scalding injury may occur if the user touches the hot metal lampshade **103** accidentally.

Further, to fit the shape of the heat bulb **102,** the metal lampshade **103** has a certain height and dimension, occupying much installation space. Further, it is not beautiful to use of the heat lamp **101** in a reptile breeding cage.

### SUMMARY OF THE INVENTION

The present invention has been accomplished under the circumstances in view. It is one object of the present invention to provide a heater for reptile breeding, which is practical for long-term application, avoiding scalding accidents.

It is another object of the present invention to provide a heater for reptile breeding, which has a low profile, requiring less installation space.

It is still another object of the present invention to provide a heater for reptile breeding, which efficiently converts watt into heat, saving power consumption.

To achieve these and other objects of the present invention, a heater for use in a reptile breeding cage comprises a flat heater body. The flat heater body comprises a front heat-radiating face, a flat back cover covered on the back side of the front heat-radiating face, a heating layer set in between the front heat-radiating face and the flat back cover, and a thermal insulation layer sandwiched between the heating layer and the flat back cover.

Preferably, the front heat-radiating face and the thermal insulation layer are directly molded in the flat heater body.

Further, the flat heater body comprises a positioning structure, for example, a locating groove located on the front side of the flat heater body around the front heat-radiating face.

In one embodiment of the present invention, the heater further comprises a flat protective shell accommodating the flat heater body. The flat protective shell has an opening through which the front heat-radiating face of the flat heater body is exposed to the outside.

The protective shell further comprises a mounting device for fastening to a reptile breeding cage.

In another embodiment of the present invention, the heater further comprises an annular top heat insulation shield and an annular bottom heat insulation shield respectively attached to opposing front and back sides of the flat heater body, a protective panel holding the annular top heat insulation shield, the flat heater body and the annular bottom heat insulation shield, a first heat insulation plate set between the flat heater body and the annular bottom heat insulation shield, a second heat insulation plate set between the annular bottom heat insulation shield and the protective panel, and a grid guard covered on the annular top heat insulation shield opposite to the flat heater body.

### BRIEF DESCRIPTION OF THE DRAWINGS

FIG. 1 is a schematic drawing illustrating a conventional reptile breeding cage equipped with a heat lamp.
FIG. 2 is an elevational view of a heater for reptile breeding in accordance with the present invention.
FIG. 3 is a sectional elevation of the heater for reptile breeding in accordance with the present invention.
FIG. 4 is an exploded view of the heater for reptile breeding in accordance with the present invention.
FIG. 5 illustrates the heater accommodated in a protective shell in accordance with the present invention.
FIG. 6 is a front view of FIG. 5.
FIG. 7 is a sectional view taken along line A-A of FIG. 6.
FIG. 8 is a schematic applied view of the present invention, illustrating the heater installed in a reptile breeding cage.
FIG. 9 is an elevational view of an alternate form of the heater for reptile breeding in accordance with the present invention.
FIG. 10 is an exploded view of the heater shown in FIG. 9.

### DETAILED DESCRIPTION OF THE PREFERRED EMBODIMENT

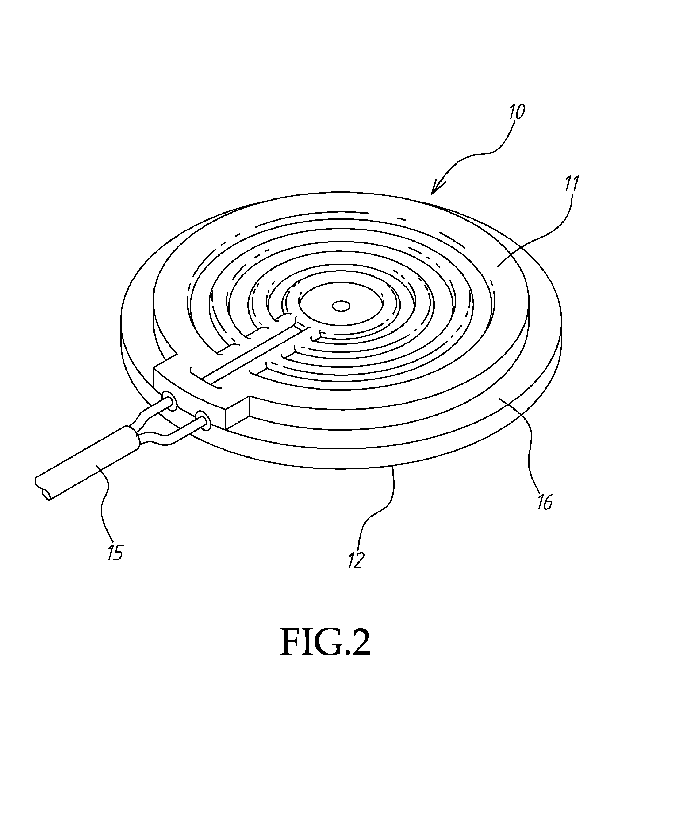

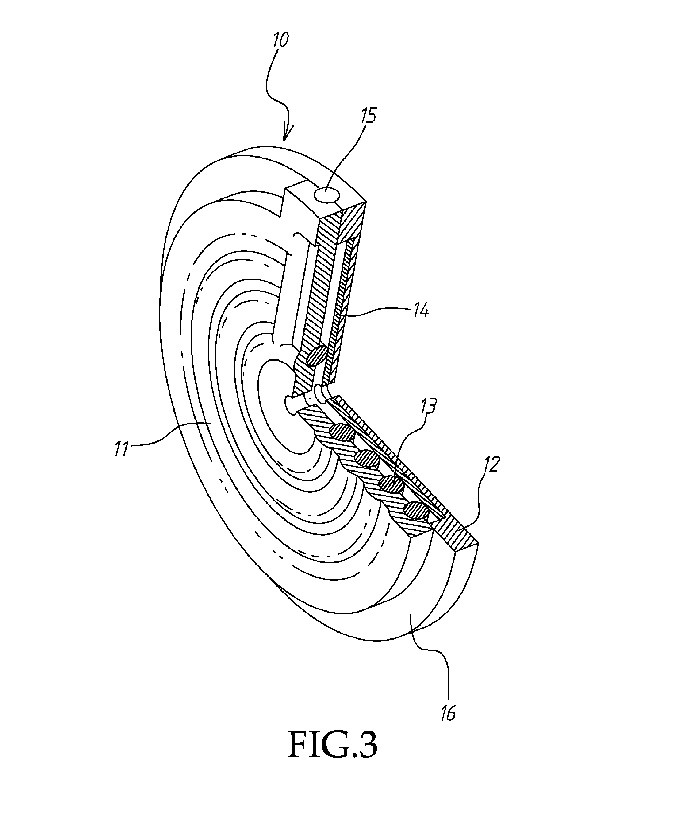

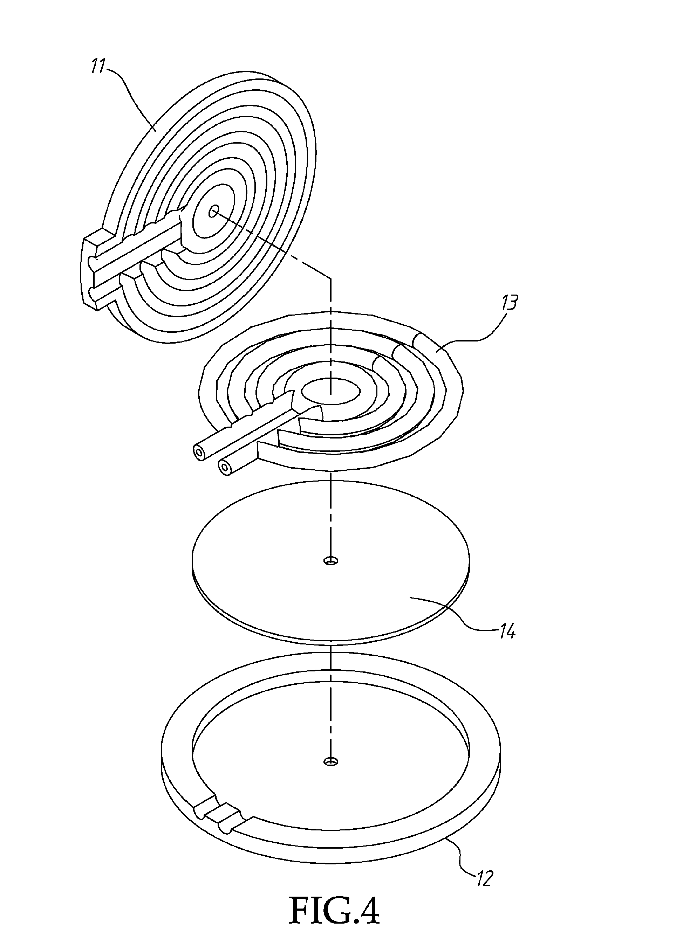

Referring to FIGS. 2-4, a heater for reptile breeding in accordance with the present invention is shown. The heater comprises a flat heater body **10.** The flat heater body comprises a front heat-radiating face **11,** a flat back cover **12** covered on the back side of the front heat-radiating face **11,** a heating layer **13** set in between the front heat-radiating face **11** and the flat back cover **12,** and a thermal insulation layer **14** sandwiched between the heating layer **13** and the flat back cover **12.**

The flat heater body **10** can be made in any of various shapes. In this embodiment, the flat heater body **10** has a disc-like shape.

The aforesaid heating layer **13** is preferably formed of a spiral heating coil, and electrically connectable to a power outlet by a power cable **15.** Using a heating coil for the heating layer **13** has the advantage of power saving. When compared to heating lamp, a 60W heating coil can achieve the same effects of a 100W heating lamp.

The aforesaid thermal insulation layer **14** is made of a thermal insulation material and configured subject to the size of the heating layer **13.** In this embodiment, the diameter of the thermal insulation layer **14** fits the diameter of the heating layer **13.**

Preferably, the flat heater body **10** is a single piece member having the heating layer **13** and the thermal insulation layer **14** embedded therein.

Further, a positioning structure, for example, a locating groove **16** can be formed on the front side of the flat heater body **10** around the front heat-radiating face **11** for mounting. However, the design of the locating groove **16** is not requisite.

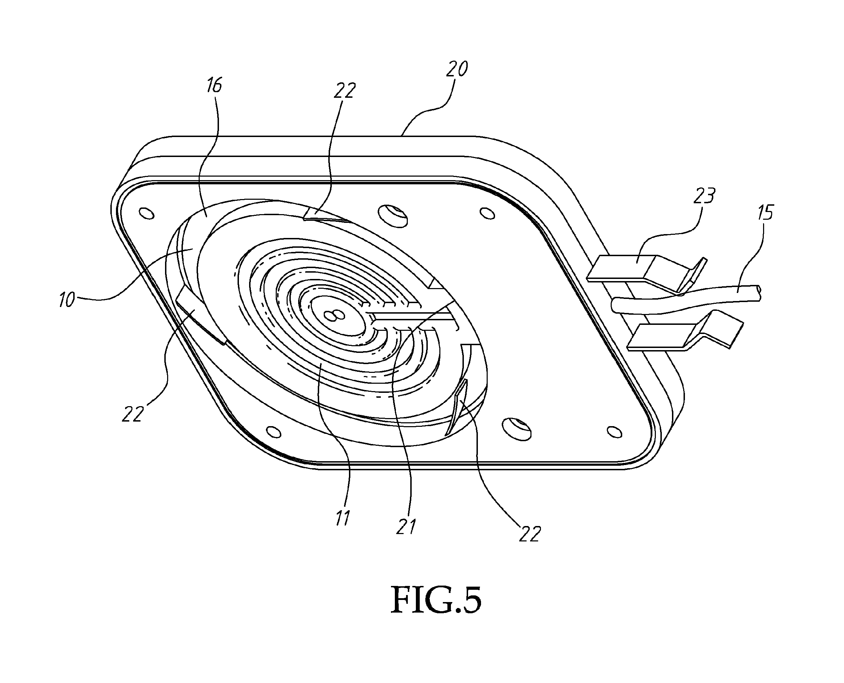

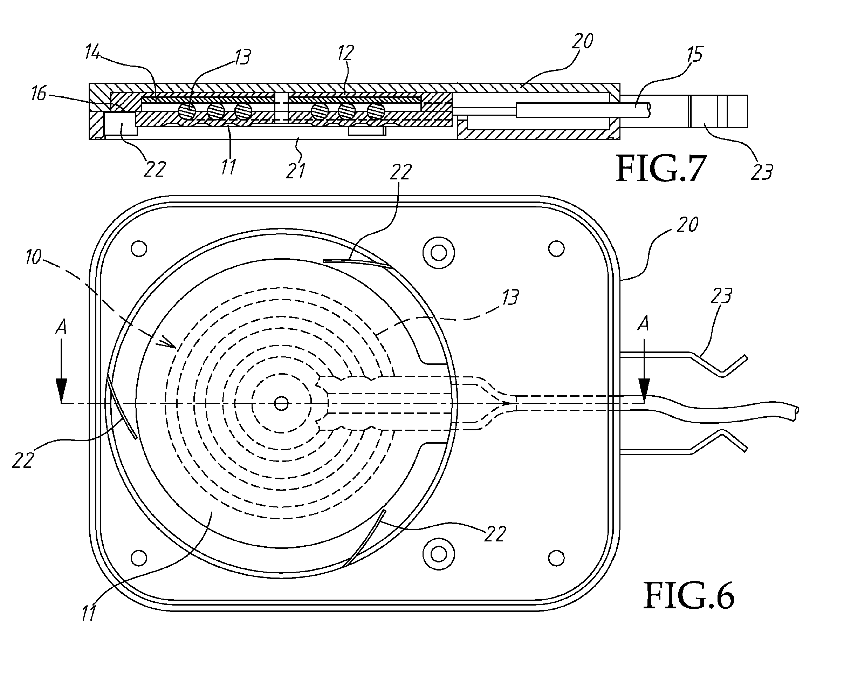

Referring to FIGS. 5-7, the flat heater body **10** can be accommodated in a flat protective shell **20.** The flat protective shell **20** has an opening **21.** After accommodation of the flat heater body **10** in the flat protective shell **20,** the front heat-radiating face **11** of the flat heater body **10** is exposed to the outside through the opening **21.**

Further, the flat protective shell **20** comprises a plurality of clamps **22** for clamping on the locating groove **16** of the flat heater body **10** to secure the flat heater body **10** inside the flat protective shell **20.**

As illustrated, the flat protective shell **20** comprises a mounting device **23** for securing to a selected part of a reptile breeding cage.

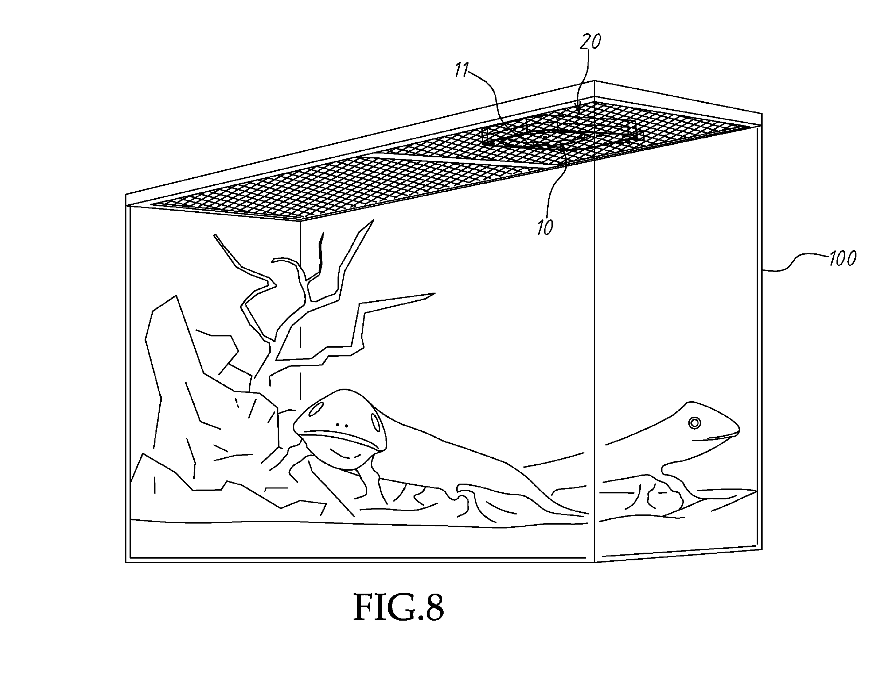

Referring to FIG. 8, the heater of the present invention can be mounted in the top side of a reptile breeding cage **100,** keeping the front heat-radiating face **11** of the flat heater body **10** to face toward the inside of the reptile breeding cage **100** so that the heater can give off heat to keep the inside space of the reptile breeding cage **100** warm.

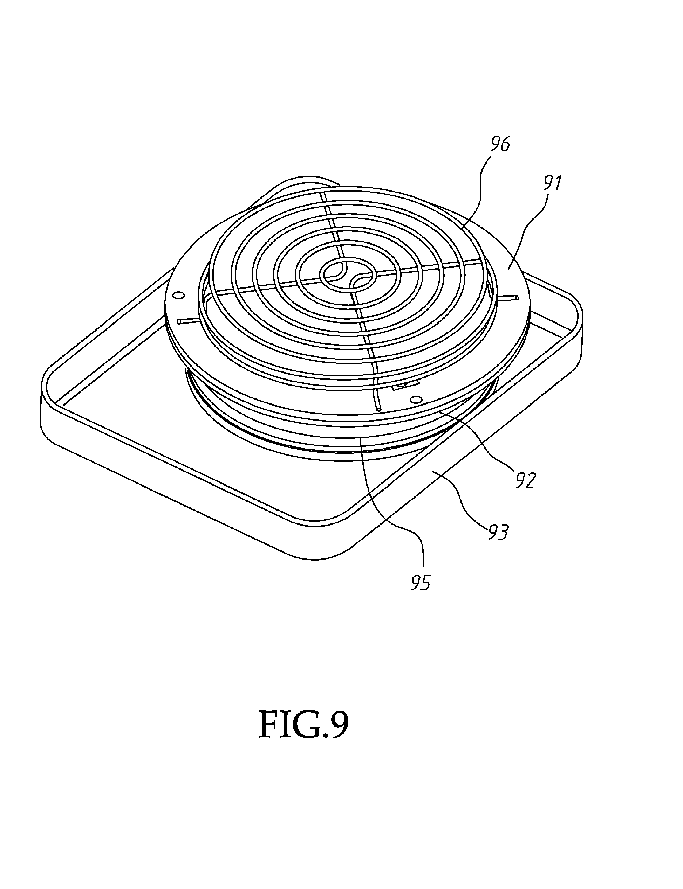

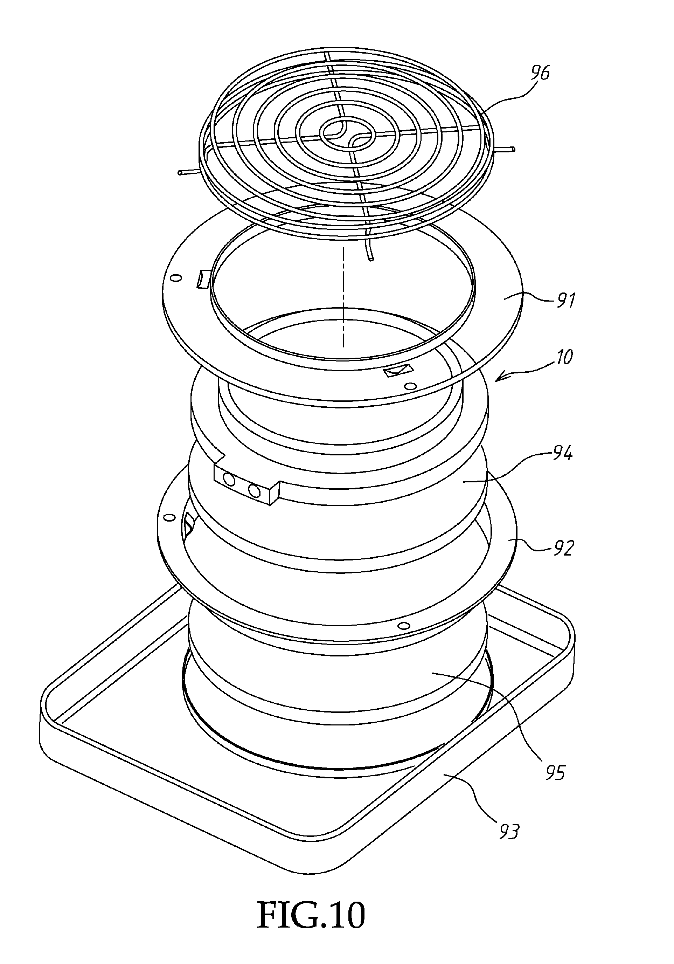

FIGS. 9 and 10 illustrate an alternate form of the present invention. According to this alternate form, the heater for reptile breeding comprises an annular top heat insulation shield **91,** an annular bottom heat insulation shield **92,** a flat heater body **10** set between the annular top heat insulation shield **91** and the annular bottom heat insulation shield **92,** a protective panel **93** holding the annular top heat insulation shield **91,** the flat heater body **10** and the annular bottom heat insulation shield **92,** a first heat insulation plate **94** set between the flat heater body **10** and the annular bottom heat insulation shield **92,** a second heat insulation plate **95** set between the annular bottom heat insulation shield **92** and the protective panel **93,** and a grid guard **96** covered on the annular top heat insulation shield **91** opposite to the flat heater body **10.** The flat heater body **10** in this embodiment is same as that shown in FIGS. 2-4.

In conclusion, the invention provides a heater for reptile breeding, which has a low profile characteristic, requiring less installation space. Under a long-term use to give off heat, the thermally insulated outer surface remains at a low temperature, avoiding scalding accidents. Further, the heating layer uses a spiral heating coil to efficiently convert watt into heat, saving power consumption and practical for use in temperature controlling applications.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A heater for use in a reptile breeding cage, comprising a flat heater body (10), said flat heater body (10) comprising a front heat-radiating face (11), a flat back cover (12) covered on a back side of said front heat-radiating face (11), a heating layer (13) set in between said front heat-radiating face (11) and said flat back cover (12), and a thermal insulation layer (14) sandwiched between said heating layer (13) and said flat back cover (12).

2. The heater as claimed in claim 1, wherein said front heat-radiating face (11) and said thermal insulation layer (14) are directly molded in said flat heater body.

3. The heater as claimed in claim 1, wherein said flat heater body (10) comprises a positioning structure (16) located on a front side thereof for mounting.

4. The heater as claimed in claim 3, wherein said positioning structure (16) is a locating groove (16) located on the front side of said flat heater body (10) around said front heat-radiating face (11).

5. The heater as claimed in claim 1, further comprising a flat protective shell (20) accommodating said flat heater body (10), said flat protective shell (20) comprising an opening (21) through which said front heat-radiating face (11) of said flat heater body (10) is exposed to the outside.

6. The heater as claimed in claim 2, further comprising a flat protective shell (20) accommodating said flat heater body (10), said flat protective shell (20) comprising an opening (21) through which said front heat-radiating face (11) of said flat heater body (10) is exposed to the outside.

7. The heater as claimed in claim 3, further comprising a flat protective shell (20) accommodating said flat heater body (10), said flat protective shell (20) comprising an opening (21) through which said front heat-radiating face (11) of said flat heater body (10) is exposed to the outside.

8. The heater as claimed in claim 5, wherein said protective shell (20) further comprises a mounting device (23) for fastening to a reptile breeding cage (100).

9. The heater as claimed in claim 1, further comprising an annular top heat insulation shield (91) and an annular bottom heat insulation shield (92) respectively attached to opposing front and back sides of said flat heater body (10), a protective panel (93) holding said annular top heat insulation shield (91), said flat heater body (10) and said annular bottom heat insulation shield (92), a first heat insulation plate (94) set between said flat heater body (10) and said annular bottom heat insulation shield (92), a second heat insulation plate (95) set between said annular bottom heat insulation shield (92) and said protective panel (93), and a grid guard (96) covered on said annular top heat insulation shield (91) opposite to said flat heater body (10).

10. The heater as claimed in claim 2 further comprising an annular top heat insulation shield (91) and an annular bottom heat insulation shield (92) respectively attached to opposing front and back sides of said flat heater body (10), a protective panel (93) holding said annular top heat insulation shield (91), said flat heater body (10) and said annular bottom heat insulation shield (92), a first heat insulation plate (94) set between said flat heater body (10) and said annular bottom heat insulation shield (92), a second heat insulation plate (95) set between said annular bottom heat insulation shield (92) and said protective panel (93), and a grid guard (96) covered on said annular top heat insulation shield (91) opposite to said flat heater body (10).

11. The heater as claimed in claim 3, further comprising an annular top heat insulation shield (91) and an annular bottom heat insulation shield (92) respectively attached to opposing front and back sides of said flat heater body (10), a protective panel (93) holding said annular top heat insulation shield (91), said flat heater body (10) and said annular bottom heat insulation shield (92), a first heat insulation plate (94) set between said flat heater body (10) and said annular bottom heat insulation shield (92), a second heat insulation plate (95) set between said annular bottom heat insulation shield (92) and said protective panel (93), and a grid guard (96) covered on said annular top heat insulation shield (91) opposite to said flat heater body (10).
